# EUROPEAN PATENT APPLICATION

(11) **EP 3 805 538 A1**
(43) Date of publication of application: **14.04.2021**
(21) Application number: 19806799.3
(22) Date of filing: 24.05.2019
(51) Int. Cl.: F02B 75/32, F02B 23/00, F02B 75/04, F02D 15/02, F16J 1/16

(54) **VARIABLE COMPRESSION DEVICE AND ENGINE SYSTEM**

(30) Priority: 25.05.2018 JP 2018101048
(71) Applicant: IHI Corporation, Koto-ku Tokyo 135-8710 (JP)
(72) Inventor: MASUDA, Yutaka, Tokyo 135-8710 (JP)
(74) Representative: Grünecker Patent- und Rechtsanwälte PartG mbB
(86) International application number: PCT/JP2019/020591
(87) International publication number: WO 2019/225729

(57) **Abstract**

A variable compression device (A) is for changing a compression ratio of an engine (1) and includes: a piston rod (6); a pump (8a) that increases a working fluid in pressure; a crosshead pin (7a) connected to the piston rod (6), the inside of the crosshead pin being provided with a fluid chamber (R3) in which the piston rod (6) is moved in a direction of increasing the compression ratio by the pressure-increased working fluid being supplied into the fluid chamber; a discharge mechanism (15) that discharges the working fluid from the fluid chamber (R3); and a first working fluid flow path (Rb) that guides the working fluid that is to be supplied to the fluid chamber (R3), the first working fluid flow path being connected to the crosshead pin (7a) and the pump (8a).

## Description

### Technical Field

The present disclosure relates to a variable compression device and an engine system.

Priority is claimed on Japanese Patent Application No. 2018-101048, filed May 25, 2018, the content of which is incorporated herein by reference.

### Background

For example, Patent Document 1 discloses a large reciprocating piston combustion engine including a crosshead. The large reciprocating piston combustion engine of Patent Document 1 is a dual-fuel engine that can operate with both a liquid fuel such as heavy oil and a gas fuel such as natural gas. In order that the large reciprocating piston combustion engine of Patent Document 1 accommodates to both a compression ratio suitable for the operation with the liquid fuel and a compression ratio suitable for the operation with the gas fuel, the crosshead is provided with an adjustment mechanism that changes the compression ratio by moving a piston rod relative to a crosshead pin by hydraulic pressure.

Patent Document 2 discloses a variable compression-ratio mechanism for an internal combustion engine, Patent Document 3 discloses a reciprocating engine, and Patent Document 4 discloses a diesel engine.

### Document of Related Art

### Patent Document

[Patent Document 1] Japanese Unexamined Patent Application, First Publication No. 2014-20375
[Patent Document 2] Japanese Unexamined Utility Model Application No. S59-40538
[Patent Document 3] Published Japanese Translation No. 2005-511946 of the PCT International Publication
[Patent Document 4] Japanese Unexamined Patent Application, First Publication No. H8-170551

### Summary

### Technical Problem

The adjustment mechanism that changes the compression ratio as described above operates by bringing a plunger pump and a relief valve provided on the crosshead pin into contact with a cam plate when a piston lowers to the bottom dead center thereof to perform supply and discharge of hydraulic oil in a hydraulic chamber. Therefore, the change of the compression ratio can be performed only when the piston is positioned at the bottom dead center, and the compression ratio cannot be changed immediately after abnormal combustion or the like occurs in a state where the piston is at a position other than the bottom dead center.

The present disclosure is made in view of the above-described problems, and an object is to allow the compression ratio in a variable compression device to be changed regardless of the crank angle.

### Solution to Problem

A first aspect of the present disclosure is a variable compression device for changing a compression ratio of an engine, including: a piston rod; a pump that increases a working fluid in pressure; a crosshead pin connected to the piston rod, the inside of the crosshead pin being provided with a fluid chamber in which the piston rod is moved in a direction of increasing the compression ratio by the pressure-increased working fluid being supplied into the fluid chamber; a discharge mechanism that discharges the working fluid from the fluid chamber; and a first working fluid flow path that guides the working fluid that is to be supplied to the fluid chamber, the first working fluid flow path being connected to the crosshead pin and the pump.

A second aspect of the present disclosure is that in the variable compression device of the first aspect, the discharge mechanism includes: a relief flow path that guides the working fluid discharged from the fluid chamber, and a spool valve that is provided in the relief flow path and is driven by the working fluid, and the variable compression device further comprises a second working fluid flow path that guides the working fluid that drives the spool valve, the second working fluid flow path being connected to the discharge mechanism.

A third aspect of the present disclosure is that in the variable compression device of the first aspect, the first working fluid flow path is integrated in a swing pipe connected to the crosshead pin and configured to be swingable.

A fourth aspect of the present disclosure is that in the variable compression device of the first aspect, the first working fluid flow path is provided inside a telescopic pipe that can extend and retract along with reciprocating linear movement of the crosshead pin.

A fifth aspect of the present disclosure is that the variable compression device of the first aspect further includes a crank shaft and a connecting rod connecting the crank shaft and the crosshead pin to each other, the crank shaft and the connecting rod converting reciprocating linear motion of the crosshead pin into rotational motion, and the first working fluid flow path is provided inside the crank shaft and inside the connecting rod.

A sixth aspect of the present disclosure is that in the variable compression device of the second aspect, both of the first working fluid flow path and the second working fluid flow path are integrated in one swing pipe connected to the crosshead pin and configured to be swingable.

A seventh aspect of the present disclosure is that in the variable compression device of the second aspect, the first working fluid flow path and the second working fluid flow path are respectively integrated in a plurality of swing pipes connected to the crosshead pin and configured to be swingable.

An eighth aspect of the present disclosure is that in the variable compression device of the second aspect, either one of the first working fluid flow path and the second working fluid flow path is integrated in a swing pipe connected to the crosshead pin and configured to be swingable.

A ninth aspect of the present disclosure is that in the variable compression device of the eighth aspect, the other of the first working fluid flow path and the second working fluid flow path is provided inside a telescopic pipe that can extend and retract along with reciprocating linear movement of the crosshead pin.

A tenth aspect of the present disclosure is that the variable compression device of the eighth aspect further includes a crank shaft and a connecting rod connecting the crank shaft and the crosshead pin to each other, the crank shaft and the connecting rod converting reciprocating linear motion of the crosshead pin into rotational motion, and the other of the first working fluid flow path and the second working fluid flow path is provided inside the crank shaft and inside the connecting rod.

A eleventh aspect of the present disclosure is that in the variable compression device of the second aspect, the first working fluid flow path and the second working fluid flow path are respectively provided inside a plurality of telescopic pipes that can extend and retract along with reciprocating linear movement of the crosshead pin.

A twelfth aspect of the present disclosure is that in the variable compression device of the second aspect, either one of the first working fluid flow path and the second working fluid flow path is provided inside a telescopic pipe that can extend and retract along with reciprocating linear movement of the crosshead pin.

A thirteenth aspect of the present disclosure is that the variable compression device of the twelfth aspect further includes a crank shaft and a connecting rod connecting the crank shaft and the crosshead pin to each other, the crank shaft and the connecting rod converting reciprocating linear motion of the crosshead pin into rotational motion, and the other of the first working fluid flow path and the second working fluid flow path is provided inside the crank shaft and inside the connecting rod.

A fourteenth aspect of the present disclosure is that the variable compression device of the second aspect further includes a crank shaft and a connecting rod connecting the crank shaft and the crosshead pin to each other, the crank shaft and the connecting rod converting reciprocating linear motion of the crosshead pin into rotational motion, and both of the first working fluid flow path and the second working fluid flow path are provided inside the crank shaft and inside the connecting rod.

A fifteenth aspect of the present disclosure is that the variable compression device of the second aspect further includes a crank shaft and a connecting rod connecting the crank shaft and the crosshead pin to each other, the crank shaft and the connecting rod converting reciprocating linear motion of the crosshead pin into rotational motion, and either one of the first working fluid flow path and the second working fluid flow path is provided inside the crank shaft and inside the connecting rod.

A sixteenth aspect of the present disclosure is that the variable compression device of any one of the first to fifteenth aspects includes a supply flow path provided inside the crosshead pin and causing the fluid chamber to communicate with the first working fluid flow path.

A seventeenth aspect of the present disclosure is that the variable compression device of any one of the first to fifteenth aspects includes a supply flow path provided on an outer periphery of the crosshead pin and causing the fluid chamber to communicate with the first working fluid flow path.

An engine system of an eighteenth aspect of the present disclosure includes the variable compression device of any one of the first to seventeenth aspects.

### Effects

According to the present disclosure, the supply and discharge of a working fluid with respect to a fluid chamber can be perfrmed regardless of the crank angle. Therefore, the compression ratio can be changed regardless of the crank angle, and the change of the compression ratio can be carried out at an appropriate timing.

### Brief Description of Drawings

FIG. 1 is a cross-sectional view of an engine system of an embodiment of the present disclosure.
FIG. 2 is a schematic cross-sectional view showing part of the engine system of the embodiment of the present disclosure.
FIG. 3 is a schematic diagram showing a configuration of a variable compression device of the embodiment of the present disclosure.
FIG. 4 is a schematic cross-sectional view showing a first modification of the engine system of the embodiment of the present disclosure.
FIG. 5 is a schematic cross-sectional view showing a second modification of the engine system of the embodiment of the present disclosure.
FIG. 6 is a partially cross-sectional side view of a crankshaft of a third modification of the engine system of the embodiment of the present disclosure.
FIG. 7 is a perspective view of a connecting rod of the third modification of the engine system of the embodiment of the present disclosure.

### Description of Embodiments

Hereinafter, an embodiment of an engine system 100 of the present disclosure will be described with reference to the drawings.

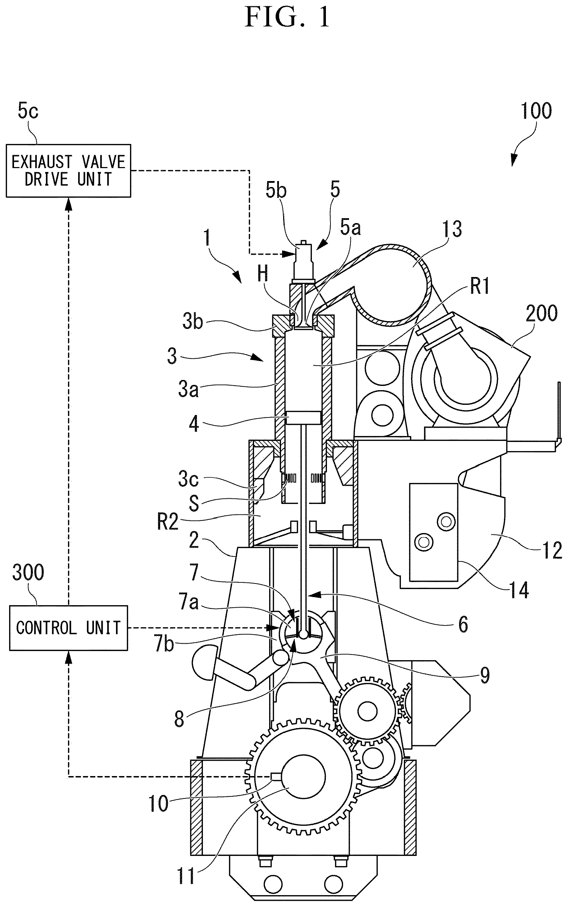

The engine system 100 of this embodiment is installed in a ship such as a large tanker, and includes an engine 1, a turbocharger 200 and a control unit 300 as shown in FIG. 1. In this embodiment, the turbocharger 200 is regarded as an auxiliary machine and is described as a separated machine from the engine 1 (main machine). However, the turbocharger 200 can be configured to be part of the engine 1. The turbocharger 200 is not an essential component to the engine system 100 of this embodiment and may not be provided in the engine system 100.

FIG. 1 is a vertical cross-sectional view along the central axis of a cylinder liner 3a (described later) provided in the engine system 100. In this embodiment, in the central axis direction of the cylinder liner 3a, a side in FIG. 1 provided with an exhaust valve unit 5 (described later) may be referred to as an upper side, and a side provided with a crank shaft 11 (described later) may be referred to as a lower side. A direction crossing the central axis of the cylinder liner 3a may be referred to as a radial direction. A view viewed in the central axis direction of the cylinder liner 3a may be referred to as a plan view.

The engine 1 is a multi-cylinder uniflow scavenging diesel engine, which is a dual-fuel engine can execute a gas operation mode of burning gas fuel such as natural gas together with liquid fuel such as heavy oil and a diesel operation mode of burning liquid fuel such as heavy oil. In the gas operation mode, only the gas fuel may be burned. The engine 1 includes a frame 2, a cylinder unit 3, a piston 4, the exhaust valve unit 5, a piston rod 6, a crosshead 7, a hydraulic unit 8 (boost mechanism), a connecting rod 9, a crank angle sensor 10, the crank shaft 11, a scavenging reservoir 12, an exhaust reservoir 13 and an air cooler 14. A cylinder is configured of the cylinder unit 3, the piston 4, the exhaust valve unit 5 and the piston rod 6.

The frame 2 is a strength member supporting the entire engine 1 and accommodates the crosshead 7, the hydraulic unit 8 and the connecting rod 9. Inside the frame 2, a crosshead pin 7a (described later) of the crosshead 7 can reciprocate.

The cylinder unit 3 includes the cylinder liner 3a, a cylinder head 3b, and a cylinder jacket 3c. The cylinder liner 3a is a cylindrical member, and a sliding surface with the piston 4 is formed at the inside (inner peripheral surface) thereof. A space surrounded by the inner peripheral surface of the cylinder liner 3a and the piston 4 is configured to be a combustion chamber R1. A plurality of scavenging ports S are provided at the lower part of the cylinder liner 3a. The scavenging ports S are openings arranged along the peripheral surface of the cylinder liner 3a and cause a scavenging chamber R2 inside the cylinder jacket 3c to communicate with the inside of the cylinder liner 3a. The cylinder head 3b is a cover member provided at the upper end of the cylinder liner 3a. The center of the cylinder head 3b in plan view is provided with an exhaust port H that is connected to the exhaust reservoir 13. The cylinder head 3b is provided with a fuel injection valve (not shown). A cylinder internal-pressure sensor (not shown) is provided in the vicinity of the fuel injection valve of the cylinder head 3b. The cylinder jacket 3c is a cylindrical member provided between the frame 2 and the cylinder liner 3a, into which the lower end of the cylinder liner 3a is inserted, and inside which the scavenging chamber R2 is provided. The scavenging chamber R2 of the cylinder jacket 3c is connected to the scavenging reservoir 12.

The piston 4 has a substantially round columnar shape, is connected to the piston rod 6 (described later) and is disposed inside the cylinder liner 3a. The outer peripheral surface of the piston 4 is provided with piston rings (not shown) that seal the gap between the piston 4 and the cylinder liner 3a. The piston 4 slides inside the cylinder liner 3a in the up-down direction together with the piston rod 6 according to pressure change in the combustion chamber R1.

The exhaust valve unit 5 includes an exhaust valve 5a, an exhaust valve cage 5b, and an exhaust valve drive unit 5c. The exhaust valve 5a is provided inside the cylinder head 3b and closes the exhaust port H of the cylinder unit 3 by the exhaust valve drive unit 5c. The exhaust valve cage 5b is a cylindrical housing that houses the end of the exhaust valve 5a. The exhaust valve drive unit 5c is an actuator that moves the exhaust valve 5a in a direction parallel to the stroke direction (sliding direction, up-down direction) of the piston 4.

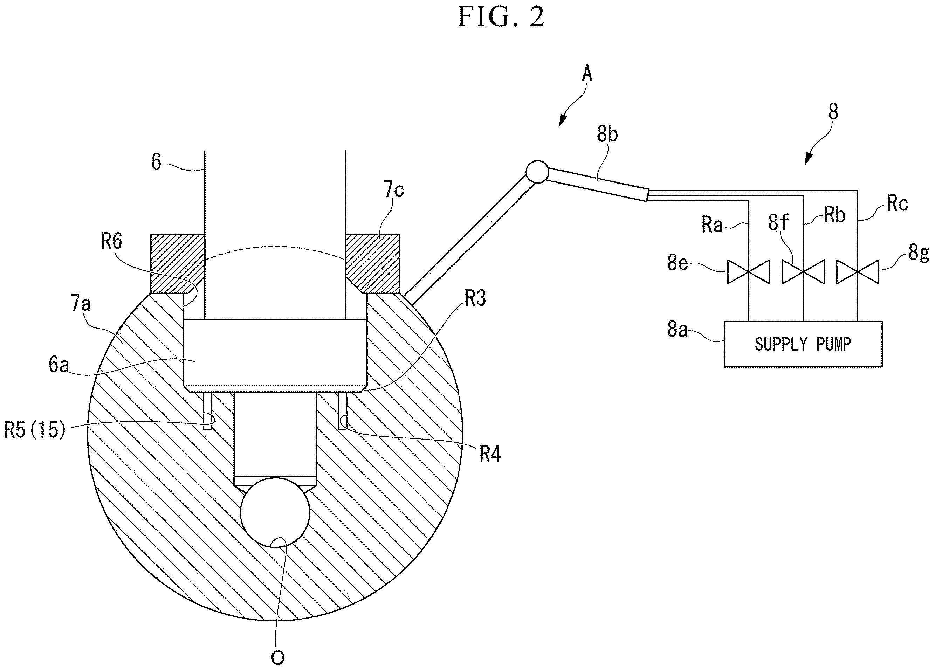

The piston rod 6 is an elongated member with one end (upper end) connected to the piston 4 and the other end (lower end) connected to the crosshead pin 7a. An end part (lower end part) of the piston rod 6 is inserted into the crosshead pin 7a, and the connecting rod 9 is rotatably connected thereto. The piston rod 6 includes a thick diameter portion 6a (refer to FIG. 2) in which part of the end part of the piston rod 6 close to the crosshead pin 7a is formed to have a large diameter. In other words, the outer peripheral surface of the end part (lower end part) of the piston rod 6 close to the crosshead pin 7a is provided with the thick diameter portion 6a protruding outward in the radial direction, and thus the diameter of the thick diameter portion 6a is greater than that of the piston rod 6. The piston rod 6 is hollow, and the inside thereof is provided with a cooling flow path (not shown) through which cooling oil (hydraulic oil) flows.

The crosshead 7 includes the crosshead pin 7a, a guide shoe 7b, and a cover member 7c. The crosshead pin 7a is a round columnar member that movably connects the piston rod 6 and the connecting rod 9, and an insertion space of the crosshead pin 7a in which the end part (lower end part) of the piston rod 6 is inserted is provided with a hydraulic chamber R3 (fluid chamber) into and from which the hydraulic oil (working fluid) is supplied and discharged. The central axis of the crosshead pin 7a extends in a direction approximately orthogonal to the up-down direction. The upper part of the crosshead pin 7a is provided with an insertion recess that opens upward and into which the thick diameter portion 6a is inserted so as to be slidable up and down. The hydraulic chamber R3 is provided between the bottom surface of the insertion recess and the lower surface of the thick diameter portion 6a. The lower side of the crosshead pin 7a lower than the center thereof is provided with an outlet hole O penetrating therethrough in the axial direction of the crosshead pin 7a. The outlet hole O is an opening from which the cooling oil that has passed through the cooling flow path (not shown) of the piston rod 6 is discharged. The crosshead pin 7a is provided with a supply flow path R4 connected to the hydraulic chamber R3 and a relief flow path R5 connecting the hydraulic chamber R3 and a spool valve 8d (described later). The space formed by being surrounded by the crosshead pin 7a and the cover member 7c is configured to be an upper oil chamber R6 in which part of the hydraulic oil is stored, and the hydraulic oil is to be supplied as the cooling oil into the cooling flow path inside the piston rod 6. In other words, the upper oil chamber R6 is formed by being surrounded by the lower surface of the cover member 7c, the inner peripheral surface of the insertion recess of the crosshead pin 7a, the outer peripheral surface of the piston rod 6, and the upper surface of the thick diameter portion 6a.

The guide shoe 7b is a member that rotatably supports the crosshead pin 7a and moves in the stroke direction of the piston 4 together with the crosshead pin 7a on a guide rail (not shown). The guide shoe 7b moves along the guide rail, so that the crosshead pin 7a is prevented from moving in a direction other than the linear direction parallel to the stroke direction of the piston 4. The crosshead pin 7a is also prevented from rotating around its central axis. The cover member 7c is an annular member fixed to the upper part of the crosshead pin 7a and through which the end part (lower end part) of the piston rod 6 is inserted. The cover member 7c is provided on the peripheral edge of the opening of the insertion recess of the crosshead pin 7a. The inner diameter of the cover member 7c is equivalent to the outer diameter of the piston rod 6 and is less than the outer diameter of the thick diameter portion 6a. The crosshead 7 transmits the linear motion of the piston 4 to the connecting rod 9.

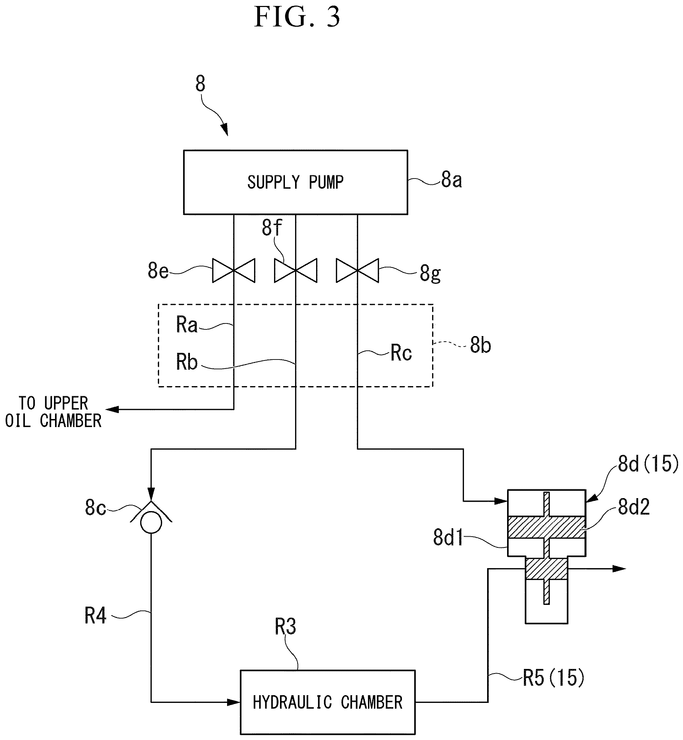

As shown in FIGS. 2 and 3, the hydraulic unit 8 includes a supply pump 8a (pump), a swing pipe 8b, a check valve 8c, the spool valve 8d, a first valve 8e, a second valve 8f and a third valve 8g. The piston rod 6, the crosshead 7 and the hydraulic unit 8 may serve as a variable compression device A of the present disclosure. The spool valve 8d and the relief flow path R5 correspond to a discharge mechanism 15 of the present disclosure.

The supply pump 8a is a pump that increases in pressure the hydraulic oil supplied from a hydraulic oil tank (not shown) and supplies the pressure-increased hydraulic oil to a cooling flow path Ra, a for-supply flow path Rb and a discharge mechanism flow path Rc (described later) according to instructions from the control unit 300. The supply pump 8a is driven by electric power of a battery of the ship and can operate before the liquid fuel is supplied to the combustion chamber R1. The hydraulic oil discharged from the supply pump 8a is divided into three.

The swing pipe 8b is a pipe that connects the supply pump 8a to the supply flow path R4, the spool valve 8d and the upper oil chamber R6 of each cylinder, and is swingable between the upper oil chamber R6 moving together with the crosshead pin 7a and the fixed supply pump 8a. It is at least necessary that the swing pipe 8b is swingably connected to the crosshead pin 7a and has a structure in which the connection between the swing pipe 8b and the crosshead pin 7a is maintained during up-down reciprocating movement of the crosshead pin 7a. As shown in FIG. 3, the inside of the swing pipe 8b is provided with three flow paths of the cooling flow path Ra, the for-supply flow path Rb (first working fluid flow path, first working fluid pipe), and the discharge mechanism flow path Rc (second working fluid flow path, second working fluid pipe). The cooling flow path Ra is a flow path that guides the hydraulic oil (cooling oil) that will be supplied to the upper oil chamber R6. The for-supply flow path Rb is a flow path that guides the hydraulic oil that will be supplied to the supply flow path R4 in the crosshead pin 7a and further to the hydraulic chamber R3. The discharge mechanism flow path Rc is a flow path that guides the hydraulic oil that will be supplied to the spool valve 8d. Each of the cooling flow path Ra, the for-supply flow path Rb and the discharge mechanism flow path Rc is connected to the supply pump 8a.

The check valve 8c is provided at, for example, the inlet of the supply flow path R4 of the crosshead pin 7a and prevents the backflow of the hydraulic oil from the hydraulic chamber R3 to the for-supply flow path Rb.

The spool valve 8d is provided at the outlet of the relief flow path R5 of the crosshead pin 7a and includes a cylinder 8d1 and a valve body 8d2. The cylinder 8d1 has a cylindrical shape with a bottom, in which the valve body 8d2 is housed. That is, the cylinder 8d1 is a cylindrical body with two ends closed. The cylinder 8d1 has a lower peripheral surface (lower part in FIG. 3) connected to the relief flow path R5 and an upper peripheral surface (upper part in FIG. 3) connected to the discharge mechanism flow path Rc, and the lower peripheral surface is provided with a discharge port communicating with the outside of the cylinder 8d1. The discharge port can discharge, to the outside, the hydraulic oil supplied into the cylinder 8d1 through the relief flow path R5. The valve body 8d2 is movable in the up-down direction inside the cylinder 8d1 and includes a rod and two columnar valve portions provided at upper and lower parts of the rod, and the lower valve portion closes the discharge port of the cylinder 8d1. An upper space formed between the upper valve portion of the valve body 8d2 and the cylinder 8d1 is filled with the hydraulic oil supplied from the discharge mechanism flow path Rc. The valve body 8d2 moves up and down according to the supply of the hydraulic oil to the upper space of the cylinder 8d1 through the discharge mechanism flow path Rc and thus can switch between opening and closing the discharge port of the cylinder 8d1.

The "up-down direction" in the above description is not limited to the vertical direction but changes depending on the mounting posture to the crosshead pin 7a.

The first valve 8e is an on-off valve provided in the cooling flow path Ra and configured to be controlled by the control unit 300. The second valve 8f is an on-off valve provided in the for-supply flow path Rb and configured to be controlled by the control unit 300. The third valve 8g is an on-off valve provided in the discharge mechanism flow path Rc and configured to be controlled by the control unit 300.

As shown in FIG. 1, the connecting rod 9 is an elongated member connected to the crosshead pin 7a and to the crank shaft 11. The connecting rod 9 converts the linear motion of the piston 4 transmitted to the crosshead pin 7a into rotational motion. The crank angle sensor 10 is a sensor for measuring the crank angle of the crank shaft 11 and transmits crank pulse signals used for calculating the crank angle to the control unit 300.

The crank shaft 11 is an elongated member connected to the connecting rod 9 provided in the cylinder and is rotated by the rotational motion transmitted from each connecting rod 9, thereby transmitting motive power to, for example, a screw or the like. The scavenging reservoir 12 is provided between the cylinder jacket 3c and the turbocharger 200, into which air pressurized by the turbocharger 200 flows. The inside of the scavenging reservoir 12 is provided with the air cooler 14. The exhaust reservoir 13 is a tubular member connected to the exhaust port H of each cylinder and to the turbocharger 200. The gas discharged from the exhaust port H is temporarily stored in the exhaust reservoir 13, thereby limiting surging, and thereafter is supplied to the turbocharger 200. The air cooler 14 is a device that cools air inside the scavenging reservoir 12.

The turbocharger 200 is a device that pressurizes, by a turbine rotated by the gas discharged from the exhaust port H, air taken in from an intake port (not shown) and supplies the air to the combustion chamber R1.

The control unit 300 is a computer that controls the supply amount of fuel and the like according to the operation or the like of the ship operator. The control unit 300 controls the hydraulic unit 8, thereby changing the compression ratio in the combustion chamber R1.

The control unit 300 can be configured of a computer, which includes a central processing unit (CPU), a storage device, an input/output device and the like. The storage device includes one or more of volatile memory such as random access memory (RAM), non-volatile memory such as read only memory (ROM), hard disk drive (HDD), solid state drive (SSD) and the like. The input/output device exchanges signals, data and the like with the exhaust valve drive unit 5c, the first valve 8e, the second valve 8f and the third valve 8g of the hydraulic unit 8, and the crank angle sensor 10 through wire or wireless. The computer can perform a predetermined function based on a program or the like stored in the storage device.

The engine system 100 is a device that slides the piston 4 inside the cylinder liner 3a by igniting and exploding the fuel injected into the combustion chamber R1 from the fuel injection valve (not shown), and rotates the crank shaft 11. In detail, the fuel supplied to the combustion chamber R1 is mixed with the air flowing in from the scavenging ports S, and then is compressed by the piston 4 moving toward the top dead center, so that the temperature of the fuel increases and the fuel ignites. In a case of using the liquid fuel, the liquid fuel vaporizes as the temperature thereof increases in the combustion chamber R1 and spontaneously ignites.

Then, the fuel in the combustion chamber R1 spontaneously ignites and rapidly expands, and the piston 4 is subjected to a pressure toward the bottom dead center. Thereby, the piston 4 moves toward the bottom dead center, the piston rod 6 is moved together with the piston 4, and the crank shaft 11 is rotated through the connecting rod 9. Furthermore, when the piston 4 is moved to the bottom dead center, pressurized air flows from the scavenging ports S into the combustion chamber R1. The exhaust port H opens by the exhaust valve unit 5 operating, and the exhaust gas in the combustion chamber R1 is pushed out to the exhaust reservoir 13 by the pressurized air.

When increasing the compression ratio, the control unit 300 drives the supply pump 8a and opens the second valve 8f, and the hydraulic oil is pressurized up to a pressure capable of lifting up the piston rod 6 and thereafter is supplied to the hydraulic chamber R3 through the for-supply flow path Rb and the supply flow path R4. Thereby, the end portion (the thick diameter portion 6a) of the piston rod 6 is lifted up by the pressure of the hydraulic oil in the hydraulic chamber R3, and accordingly the top dead center position of the piston 4 is shifted upward (toward the exhaust port H). That is, the piston 4 and the piston rod 6 move away from the crosshead pin 7a, the top dead center position of the piston 4 is changed upward, and thus the compression ratio of the engine 1 increases.

When decreasing the compression ratio, the control unit 300 drives the supply pump 8a and opens the third valve 8g, and the hydraulic oil is supplied through the discharge mechanism flow path Rc to the upper space of the cylinder 8d1. Thereby, the pressure in the upper space of the cylinder 8d1 increases, the valve body 8d2 is moved downward, so that the discharge port communicates with the relief flow path R5, and the hydraulic oil in the hydraulic chamber R3 is discharged from the discharge port. Then, the hydraulic oil in the hydraulic chamber R3 reduces, the piston rod 6 is moved downward (toward the crankshaft 11), and accordingly the top dead center position of the piston 4 is shifted downward. That is, the piston 4 and the piston rod 6 approach the crosshead pin 7a, the top dead center position of the piston 4 is changed downward, and thus the compression ratio of the engine 1 decreases.

When switching the fuel from the gas fuel to the liquid fuel, the control unit 300 first switches the fuel to the liquid fuel and thereafter increases the compression ratio through the above way. When switching the fuel from the liquid fuel to the gas fuel, the control unit 300 first decreases the compression ratio through the above way to make it reach a needed compression ratio, and thereafter switches the fuel to the gas fuel.

According to this embodiment, the control unit 300 drives the supply pump 8a, the second valve 8f and the third valve 8g regardless of the position of the piston 4, thereby performing supply and discharge of the hydraulic oil with respect to the hydraulic chamber R3. Therefore, the compression ratio can be changed regardless of the crank angle of the engine 1, and the change of the compression ratio can be performed immediately after the abnormal combustion or the like occurs in a state where the piston 4 is at a position other than the bottom dead center.

According to this embodiment, the compression ratio can be decreased by controlling the spool valve 8d provided in the relief flow path R5 using the hydraulic oil. Therefore, by supplying the hydraulic oil into the crosshead pin 7a, the hydraulic oil in the hydraulic chamber R3 can be discharged, and a simple configuration can be obtained.

According to this embodiment, the supply flow path R4 and the relief flow path R5 are provided inside the crosshead pin 7a. Thereby, no pipes have to be provided on the outside of the crosshead pin 7a, and the crosshead pin 7a can be easily arranged.

According to this embodiment, the cooling flow path Ra, the for-supply flow path Rb and the discharge mechanism flow path Rc are integrated in the swing pipe 8b. Thereby, the configuration of the variable compression device can be simplified.

A variable compression device A of this embodiment is a variable compression device for changing the compression ratio of an engine 1, and includes: a piston rod 6; a supply pump 8a that increases hydraulic oil (working fluid) in pressure; a crosshead pin 7a connected to the piston rod 6, the inside of the crosshead pin 7a being provided with a hydraulic chamber R3 (fluid chamber) in which the piston rod 6 is moved in a direction of increasing the compression ratio by the pressure-increased working fluid being supplied into the hydraulic chamber R3; a discharge mechanism 15 that discharges the hydraulic oil from the hydraulic chamber R3; and a for-supply flow path Rb (first working fluid flow path) that guides the hydraulic oil that is to be supplied to the hydraulic chamber R3, the for-supply flow path Rb being connected to the crosshead pin 7a and the supply pump 8a.

The discharge mechanism 15 includes: a relief flow path R5 that guides the hydraulic oil discharged from the hydraulic chamber R3, and a spool valve 8d that is provided in the relief flow path R5 and is driven by the hydraulic oil, and the variable compression device A further includes a discharge mechanism flow path Rc (second working fluid flow path) that guides the hydraulic oil that drives the spool valve 8d, the discharge mechanism flow path Rc being connected to the discharge mechanism 15.

The for-supply flow path Rb and the discharge mechanism flow path Rc are integrated in a swing pipe 8b connected to the crosshead pin 7a and configured to be swingable.

The variable compression device A includes a supply flow path R4 provided inside the crosshead pin 7a and causing the hydraulic chamber R3 to communicate with the for-supply flow path Rb.

An engine system 100 of this embodiment includes the variable compression device A.

Next, a plurality of modifications of the engine system 100 of the above embodiment will be described below. In the following description, components equivalent to those of the above embodiment are represented by the same reference signs, and descriptions thereof are omitted or simplified.

### (First Modification)

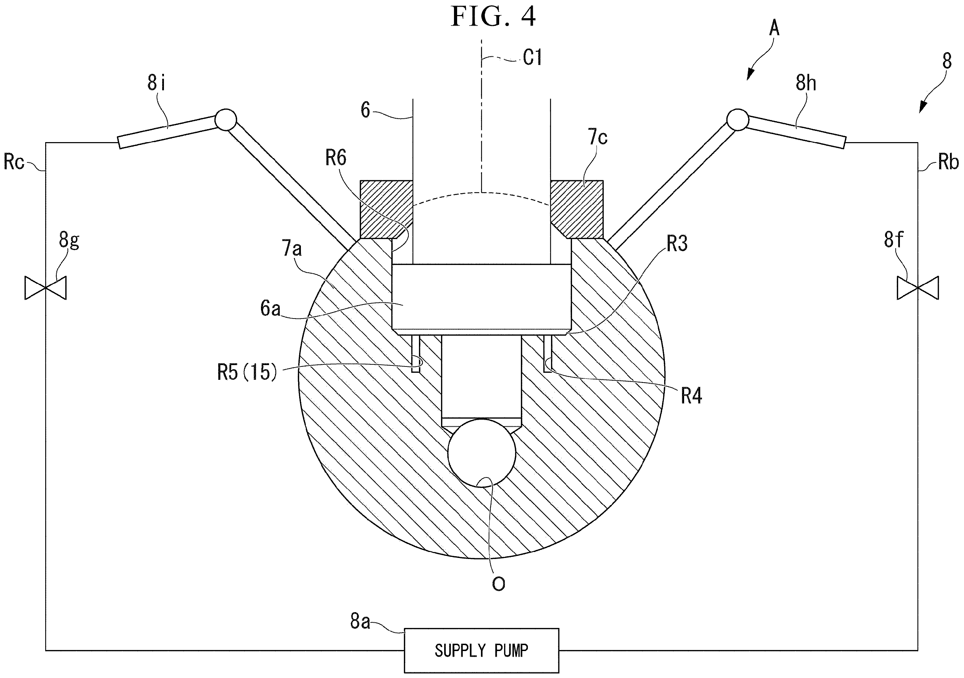

FIG. 4 is a schematic cross-sectional view showing a first modification of the engine system 100 of the above embodiment and is a cross-sectional view in a direction orthogonal to the central axis of the crosshead pin 7a.

In the above embodiment, both of the for-supply flow path Rb and the discharge mechanism flow path Rc are integrated in one swing pipe 8b connected to the crosshead pin 7a and configured to be swingable. That is, the variable compression device A of the above embodiment includes the one swing pipe 8b.

In the first modification, the for-supply flow path Rb and the discharge mechanism flow path Rc are respectively integrated in a plurality of swing pipes 8h and 8i connected to the crosshead pin 7a and configured to be swingable. The swing pipes 8h and 8i are connected to two sides of the crosshead pin 7a, and a central axis C1 of the cylinder liner 3a (refer to FIG. 1) is disposed between the two sides. It is at least necessary that the swing pipes 8h and 8i are connected to different positions of the crosshead pin 7a, and for example, both of the swing pipes 8h and 8i may be connected to one side of the crosshead pin 7a. The variable compression device A of this modification includes the swing pipes 8h and 8i.

The for-supply flow path Rb is integrated in the swing pipe 8h. In other words, the internal area of the swing pipe 8h forms part of the for-supply flow path Rb. The discharge mechanism flow path Rc is integrated in the swing pipe 8i. In other words, the internal area of the swing pipe 8i forms part of the discharge mechanism flow path Rc.

Although the cooling flow path Ra is omitted in FIG. 4, the cooling flow path Ra may be integrated in either one of the swing pipes 8h and 8i or may be integrated in another swing pipe (not shown) different from the swing pipe 8h or 8i, connected to the crosshead pin 7a and configured to be swingable.

In the first modification, the swing pipes 8h and 8i are connected to two sides of the crosshead pin 7a, and the central axis C1 of the piston rod 6 is disposed between the two sides, and thus even if it is difficult to connect both of the swing pipes 8h and 8i to one side of the crosshead pin 7a due to contact or the like with other members, the swing pipes 8h and 8i can be appropriately arranged inside the frame 2.

Either one of the for-supply flow path Rb and the discharge mechanism flow path Rc may be integrated in one swing pipe connected to the crosshead pin 7a and configured to be swingable.

### (Second Modification)

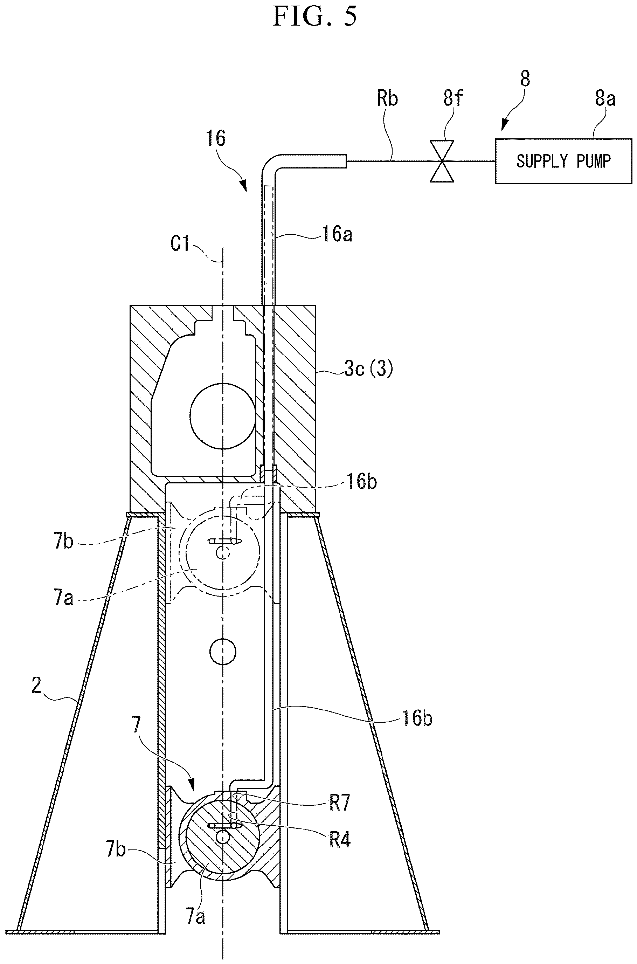

FIG. 5 is a schematic cross-sectional view showing a second modification of the engine system 100 of the above embodiment and is an enlarged cross-sectional view of the crosshead 7 and its vicinity of the engine system 100 shown in FIG. 1.

The crosshead pin 7a linearly reciprocates in the central axis C1 direction of the cylinder liner 3a (refer to FIG. 1). The variable compression device A of this modification includes a telescopic pipe 1 6 that can extend and retract along with the reciprocating linear movement of the crosshead pin 7a. The telescopic pipe 16 includes an outer pipe 16a extending in the reciprocating linear movement direction of the crosshead pin 7a and fixed to the cylinder jacket 3c, and an inner pipe 16b inserted into the outer pipe 16a and movable relative to the outer pipe 16a in the linear movement direction. The telescopic pipe 16 is configured to allow the hydraulic oil to flow thereinside from the outer pipe 16a to the inner pipe 16b. The gap between the outer pipe 16a and the inner pipe 16b is set to a size that limits leakage of the hydraulic oil therethrough. A sealing member (O-ring or the like) for preventing leakage of the hydraulic oil may be arranged at the gap between the outer pipe 16a and the inner pipe 16b.

The upper end of the outer pipe 16a (the end distant from the inner pipe 16b) is connected to the supply pump 8a via the second valve 8f. The lower end of the inner pipe 16b (the end distant from the outer pipe 16a) is bent in a crank shape and is connected to the guide shoe 7b through a fastening member or bracket (not shown). The lower end of the inner pipe 16b may be straight without being bent. The internal area of the inner pipe 16b communicates with the supply flow path R4 of the crosshead pin 7a through a through-hole R7 provided in the guide shoe 7b. The lower end of the inner pipe 16b may be directly connected to the crosshead pin 7a, and the internal area of the inner pipe 16b may directly communicate with the supply flow path R4 of the crosshead pin 7a.

In this modification, the for-supply flow path Rb is provided inside the telescopic pipe 16. In other words, the internal area of the telescopic pipe 16 forms part of the for-supply flow path Rb.

Although the cooling flow path Ra and the discharge mechanism flow path Rc are omitted in FIG. 5, the cooling flow path Ra and the discharge mechanism flow path Rc may be respectively provided inside two telescopic pipes different from the telescopic pipe 16, and the two telescopic pipes can extend and retract along with the reciprocating linear movement of the crosshead pin 7a. That is, the cooling flow path Ra, the for-supply flow path Rb and the discharge mechanism flow path Rc may be respectively provided inside a plurality of telescopic pipes that can extend and retract along with the reciprocating linear movement of the crosshead pin 7a. These telescopic pipes may be provided in one lateral area of the central axis C1, or may be provided in two lateral areas of the central axis C1 that is disposed between the two areas.

According to this modification, the hydraulic oil can be appropriately supplied through the telescopic pipe 16 or the like to the crosshead pin 7a that linearly reciprocates.

Either one of the for-supply flow path Rb and the discharge mechanism flow path Rc may be provided inside a telescopic pipe that can extend and retract along with the reciprocating linear movement of the crosshead pin 7a.

### (Third Modification)

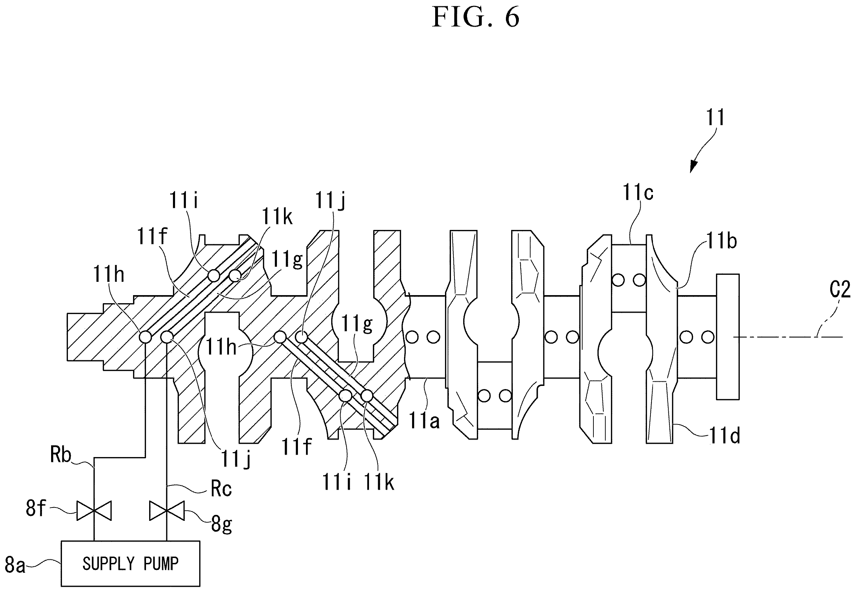

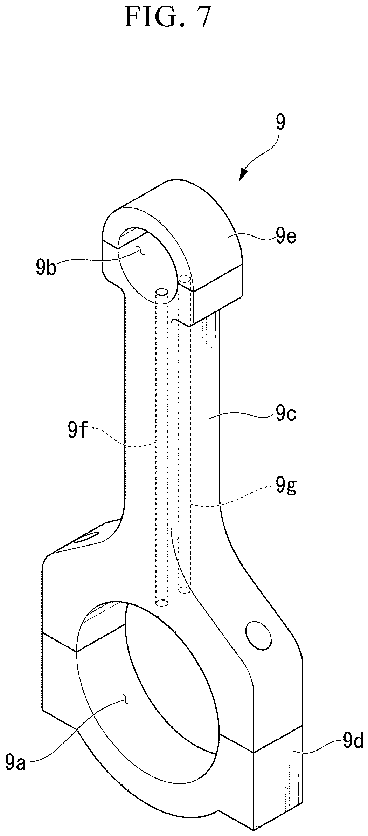

FIG. 6 is a partially cross-sectional view of a crankshaft 11 of a third modification of the engine system 100 of the above embodiment. FIG. 7 is a perspective view of a connecting rod 9 of the third modification of the engine system 100 of the above embodiment.

As shown in FIG. 6, the crank shaft 11 of this modification includes a main journal 11a extending in a central axis C2 direction of the crank shaft 11, a plurality of crank pins 11c shifted outward in the radial direction of the central axis C2 from the main journal 11a and connected to the main journal 11a through crank arms 11b, and counter weights 11d disposed on the opposite side to the crank pins 11 c across the central axis C2. Both of the main journal 11a and the crank pin 11c are formed in round columnar shapes, and the central axis of the crank pin 11c is parallel to the central axis C2.

The main journal 11a is rotatably supported by bearing members (not shown) in the frame 2. The connecting rod 9 is rotatably connected to the crank pin 11c.

The variable compression device A of this modification further includes, in addition to the components shown in the above embodiment, the crank shaft 11, and the connecting rod 9 connecting the crank shaft 11 and the crosshead pin 7a to each other.

The crank shaft 11 is provided with a plurality of pairs of a first crank shaft oil hole 11f and a second crank shaft oil hole 11 g. The first crank shaft oil hole 1 1 f and the second crank shaft oil hole 11g linearly extend in parallel to each other and are inclined with respect to the central axis C2. In FIG. 6, the flow of the hydraulic oil is indicated by arrows.

One end of the first crank shaft oil hole 11f communicates with a first oil supply hole 11h that opens at the outer peripheral surface of the main journal 11a. Although the other end of the first crank shaft oil hole 11f opens at the outer surface of the crank arm 11b, the other end is closed by an oil hole blind plug (not shown). An intermediate part between the two ends of the first crank shaft oil hole 11f communicates with a first oil discharge hole 11i that opens at the outer peripheral surface of the crank pin 11c. The first crank shaft oil hole 11f can be formed using a cutting tool such as a drill from the crank arm 11b toward the main journal 11 a. If working can be performed, the first crank shaft oil hole 11f may be formed using a cutting tool such as a drill from the main journal 11a toward the crank pin 11c, and the end of the first crank shaft oil hole 11f close to the main journal 11 a may be closed by an oil hole blind plug. The working methods for forming the first crank shaft oil hole 11f, the first oil supply hole 11h and the first oil discharge hole 11i are not particularly limited, and it is at least necessary to form oil holes that can supply the hydraulic oil from the main journal 11a to the crank pin 11c.

The first oil supply hole 11 h is connected to the supply pump 8a via the second valve 8f.

One end of the second crank shaft oil hole 11 g communicates with a second oil supply hole 11j that opens at the outer peripheral surface of the main journal 11a. The second oil supply hole 11j is provided at a position different from the first oil supply hole 11h in the central axis C2 direction. Although the other end of the second crank shaft oil hole 11g opens at the outer surface of the crank arm 11b, the other end is closed by an oil hole blind plug (not shown). An intermediate part between the two ends of the second crank shaft oil hole 11g communicates with a second oil discharge hole 11k that opens at the outer peripheral surface of the crank pin 11c. The second oil discharge hole 11k is provided at a position different from the first oil discharge hole 11i in the central axis C2 direction. The second crank shaft oil hole 11g can be formed using a cutting tool such as a drill from the crank arm 11b toward the main journal 11a similar to the first crank shaft oil hole 11f. If working can be performed, the second crank shaft oil hole 11g may be formed using a cutting tool such as a drill from the main journal 11a toward the crank pin 11c, and the end of the second crank shaft oil hole 11g close to the main journal 11a may be closed by an oil hole blind plug. The working methods for forming the second crank shaft oil hole 11g, the second oil supply hole 11j and the second oil discharge hole 11k are not particularly limited, and it is at least necessary to form oil holes that can supply the hydraulic oil from the main journal 11 a to the crank pin 11 c.

The second oil supply hole 11j is connected to the supply pump 8a via the third valve 8g.

As shown in FIG. 7, the connecting rod 9 is an elongated member extending in one direction, one end portion thereof is provided with a first insertion hole 9a into which the crank pin 11c of the crank shaft 11 is rotatably inserted, and the other end portion thereof is provided with a second insertion hole 9b into which the crosshead pin 7a is rotatably inserted. The opening directions of the first insertion hole 9a and the second insertion hole 9b are the same as each other and are orthogonal to the extending direction of the connecting rod 9.

The connecting rod 9 includes an elongated rod body 9c extending in the above one direction, a substantially arc-shaped first cap 9d connected to one end of the rod body 9c by using fastening members or the like (not shown) to form the first insertion hole 9a between the rod body 9c and the first cap 9d, and a substantially arc-shaped second cap 9e connected to the other end of the rod body 9c by using fastening members or the like (not shown) to form the second insertion hole 9b between the rod body 9c and the second cap 9e.

The inside of the rod body 9c is provided with a first rod oil hole 9f and a second rod oil hole 9g that extend in the extending direction of the rod body 9c. The first rod oil hole 9f and the second rod oil hole 9g are arranged to be next to each other in a direction orthogonal to the extending direction of the rod body 9c, that is, in the opening direction of the first insertion hole 9a and the second insertion hole 9b.

The hydraulic oil introduced into the gap between the outer peripheral surface of the crank pin 11c and the inner peripheral surface of the first insertion hole 9a through the first crank shaft oil hole 11f provided in the crank shaft 11 flows into the first rod oil hole 9f, is introduced into the gap between the outer peripheral surface of the crosshead pin 7a (refer to FIG. 2) and the inner peripheral surface of the second insertion hole 9b, and flows into the supply flow path R4 of the crosshead pin 7a.

The hydraulic oil introduced into the gap between the outer peripheral surface of the crank pin 11c and the inner peripheral surface of the first insertion hole 9a through the second crank shaft oil hole 11g provided in the crank shaft 11 flows into the second rod oil hole 9g, is introduced into the gap between the outer peripheral surface of the crosshead pin 7a and the inner peripheral surface of the second insertion hole 9b, and flows into the upper space of the cylinder 8d1 of the spool valve 8d provided in the relief flow path R5 of the crosshead pin 7a.

That is, in this modification, the for-supply flow path Rb is provided inside the crank shaft 11 and inside the connecting rod 9. In other words, the first oil supply hole 11h, the first crank shaft oil hole 11f and the first oil discharge hole 11i of the crank shaft 11, and the first rod oil hole 9f of the connecting rod 9 form part of the for-supply flow path Rb.

In this modification, the discharge mechanism flow path Rc is provided inside the crank shaft 11 and inside the connecting rod 9. In other words, the second oil supply hole 11j, the second crank shaft oil hole 11g and the second oil discharge hole 11k of the crank shaft 11, and the second rod oil hole 9g of the connecting rod 9 form part of the discharge mechanism flow path Rc.

Although the cooling flow path Ra is omitted in FIG. 6, the cooling flow path Ra may be provided inside the crank shaft 11 and inside the connecting rod 9.

According to this modification, without providing a swing pipe or a telescopic pipe that can move along with the crosshead pin 7a on the outside of the crosshead pin 7a , the hydraulic oil can be supplied to the supply flow path R4 of the crosshead pin 7a and to the spool valve 8d through the crank shaft 11 and the connecting rod 9.

Either one of the for-supply flow path Rb and the discharge mechanism flow path Rc may be provided inside the crank shaft 11 and inside the connecting rod 9.

Hereinbefore, an embodiment of the present disclosure is described with reference to the drawings, but the present disclosure is not limited to the above embodiment. The shapes, combinations and the like of the components shown in the above embodiment are examples, and various modifications can be adopted based on design requirements and the like within the scope of the present disclosure.

In the above embodiment, the supply flow path R4 and the relief flow path R5 are provided in the crosshead pin 7a, but the present disclosure is not limited to this. The supply flow path R4 and the relief flow path R5 may be pipes provided on the outer periphery (outside) of the crosshead pin 7a and may be connected to the bottom surface of the hydraulic chamber R3. In this case, working for forming a flow path inside the crosshead pin 7a does not have to be performed, and thus the crosshead pin 7a can be easily manufactured.

In the above embodiment, the hydraulic oil in the hydraulic chamber R3 is discharged by operating the spool valve 8d, but the present disclosure is not limited to this. For example, a configuration may be adopted in which a suction pump connected to the discharge mechanism flow path Rc of the swing pipe 8b is connected to the relief flow path R5. In this case, the hydraulic oil in the hydraulic chamber R3 is sucked by the suction pump and is discharged to the outside. The "spool valve" of the above embodiment includes a valve that is driven in response to the supply of hydraulic oil through one flow path and that can switch between flow and stop of hydraulic oil in another flow path.

In the above embodiment, the swing pipe 8b is provided with the cooling flow path Ra, but the present disclosure is not limited to this. The cooling flow path Ra may be connected to the upper oil chamber R6 through a swing pipe different from the swing pipe 8b. Similarly, the for-supply flow path Rb and the discharge mechanism flow path Rc may be connected to the crosshead pin 7a through different swing pipes.

In the above embodiment, the for-supply flow path Rb and the discharge mechanism flow path Rc can be provided in one swing pipe, and in the first modification, the flow paths Rb and Rc can be respectively provided in a plurality of swing pipes. In the second modification, the for-supply flow path Rb and the discharge mechanism flow path Rc can be respectively provided in a plurality of telescopic pipes. In the third modification, both of the for-supply flow path Rb and the discharge mechanism flow path Rc can be provided inside the crankshaft 11 and inside the connecting rod 9. However, the present disclosure is not limited to these. One or more may be selected from the swing pipe, the telescopic pipe, and the crank shaft 11 and the connecting rod 9 for the formation area for the for-supply flow path Rb and the discharge mechanism flow path Rc. For example, either one of the for-supply flow path Rb and the discharge mechanism flow path Rc may be provided in a swing pipe, and the other may be provided in a telescopic pipe.

In the above embodiment, the discharge mechanism 15 includes the relief flow path R5 and the spool valve 8d, but the present disclosure is not limited to this. It is at least necessary that the discharge mechanism 15 is configured to discharge the hydraulic oil from the hydraulic chamber R3 and includes, for example, a relief flow path connected to the hydraulic chamber R3 and a valve that is provided in the relief flow path and that can switch between flowing and closing. This valve may be, for example, a solenoid valve.

### Description of Reference Signs

1 engine
2 frame
3 cylinder unit
3a cylinder liner
3b cylinder head
3c cylinder jacket
4 piston
5 exhaust valve unit
5a exhaust valve
5b exhaust valve cage
5c exhaust valve drive unit
6 piston rod
7 crosshead
7a crosshead pin
7b guide shoe
7c cover member
8 hydraulic unit
8a supply pump (pump)
8b swing pipe
8c check valve
8d spool valve
8d1 cylinder
8d2 valve body
8e first valve
8f second valve
8g third valve
9 connecting rod
10 crank angle sensor
11 crank shaft
12 scavenging reservoir
13 exhaust reservoir
14 air cooler
15 discharge mechanism
100 engine system
200 turbocharger
300 control unit
A variable compression device
H exhaust port
S scavenging port
O outlet hole
R1 combustion chamber
R2 scavenging chamber
R3 hydraulic chamber
R4 supply flow path
R5 relief flow path
R6 upper oil chamber
Ra cooling flow path
Rb for-supply flow path (first working fluid flow path)
Rc discharge mechanism flow path (second working fluid flow path)

## Claims

1. A variable compression device for changing a compression ratio of an engine, comprising:
a piston rod;
a pump that increases a working fluid in pressure;
a crosshead pin connected to the piston rod, the inside of the crosshead pin being provided with a fluid chamber in which the piston rod is moved in a direction of increasing the compression ratio by the pressure-increased working fluid being supplied into the fluid chamber;
a discharge mechanism that discharges the working fluid from the fluid chamber; and
a first working fluid flow path that guides the working fluid that is to be supplied to the fluid chamber, the first working fluid flow path being connected to the crosshead pin and the pump.

2. The variable compression device according to claim 1, wherein
the discharge mechanism includes:
a relief flow path that guides the working fluid discharged from the fluid chamber, and
a spool valve that is provided in the relief flow path and is driven by the working fluid, and
the variable compression device further comprises a second working fluid flow path that guides the working fluid that drives the spool valve, the second working fluid flow path being connected to the discharge mechanism.

3. The variable compression device according to claim 1, wherein
the first working fluid flow path is integrated in a swing pipe connected to the crosshead pin and configured to be swingable.

4. The variable compression device according to claim 1, wherein
the first working fluid flow path is provided inside a telescopic pipe that can extend and retract along with reciprocating linear movement of the crosshead pin.

5. The variable compression device according to claim 1, further comprising
a crank shaft and a connecting rod connecting the crank shaft and the crosshead pin to each other, the crank shaft and the connecting rod converting reciprocating linear motion of the crosshead pin into rotational motion, wherein
the first working fluid flow path is provided inside the crank shaft and inside the connecting rod.

6. The variable compression device according to claim 2, wherein
both of the first working fluid flow path and the second working fluid flow path are integrated in one swing pipe connected to the crosshead pin and configured to be swingable.

7. The variable compression device according to claim 2, wherein
the first working fluid flow path and the second working fluid flow path are respectively integrated in a plurality of swing pipes connected to the crosshead pin and configured to be swingable.

8. The variable compression device according to claim 2, wherein
either one of the first working fluid flow path and the second working fluid flow path is integrated in a swing pipe connected to the crosshead pin and configured to be swingable.

9. The variable compression device according to claim 8, wherein
the other of the first working fluid flow path and the second working fluid flow path is provided inside a telescopic pipe that can extend and retract along with reciprocating linear movement of the crosshead pin.

10. The variable compression device according to claim 8, further comprising
a crank shaft and a connecting rod connecting the crank shaft and the crosshead pin to each other, the crank shaft and the connecting rod converting reciprocating linear motion of the crosshead pin into rotational motion, wherein
the other of the first working fluid flow path and the second working fluid flow path is provided inside the crank shaft and inside the connecting rod.

11. The variable compression device according to claim 2, wherein
the first working fluid flow path and the second working fluid flow path are respectively provided inside a plurality of telescopic pipes that can extend and retract along with reciprocating linear movement of the crosshead pin.

12. The variable compression device according to claim 2, wherein
either one of the first working fluid flow path and the second working fluid flow path is provided inside a telescopic pipe that can extend and retract along with reciprocating linear movement of the crosshead pin.

13. The variable compression device according to claim 12, further comprising
a crank shaft and a connecting rod connecting the crank shaft and the crosshead pin to each other, the crank shaft and the connecting rod converting reciprocating linear motion of the crosshead pin into rotational motion, wherein
the other of the first working fluid flow path and the second working fluid flow path is provided inside the crank shaft and inside the connecting rod.

14. The variable compression device according to claim 2, further comprising
a crank shaft and a connecting rod connecting the crank shaft and the crosshead pin to each other, the crank shaft and the connecting rod converting reciprocating linear motion of the crosshead pin into rotational motion, wherein
both of the first working fluid flow path and the second working fluid flow path are provided inside the crank shaft and inside the connecting rod.

15. The variable compression device according to claim 2, further comprising
a crank shaft and a connecting rod connecting the crank shaft and the crosshead pin to each other, the crank shaft and the connecting rod converting reciprocating linear motion of the crosshead pin into rotational motion, wherein
either one of the first working fluid flow path and the second working fluid flow path is provided inside the crank shaft and inside the connecting rod.

16. The variable compression device according to any one of claims 1 to 15, comprising
a supply flow path provided inside the crosshead pin and causing the fluid chamber to communicate with the first working fluid flow path.

17. The variable compression device according to any one of claims 1 to 15, comprising
a supply flow path provided on an outer periphery of the crosshead pin and causing the fluid chamber to communicate with the first working fluid flow path.

18. An engine system, comprising the variable compression device according to any one of claims 1 to 17.
